**Europäisches Patentamt**

**European Patent Office**

**Office européen des brevets**

(19)

(11) Veröffentlichungsnummer : **0 389 074 B1**

(12)

# EUROPÄISCHE PATENTSCHRIFT

(45) Veröffentlichungstag der Patentschrift :
**19.08.92 Patentblatt 92/34**

(51) Int. Cl.⁵ : **F16L 15/00, E21B 17/08,
E21B 17/042**

(21) Anmeldenummer : **90250068.5**

(22) Anmeldetag : **14.03.90**

(54) **Rohrverbindung.**

(30) Priorität : **16.03.89 DE 3908904**

(43) Veröffentlichungstag der Anmeldung :
**26.09.90 Patentblatt 90/39**

(45) Bekanntmachung des Hinweises auf die
Patenterteilung :
**19.08.92 Patentblatt 92/34**

(84) Benannte Vertragsstaaten :
**BE DE ES FR GB**

(56) Entgegenhaltungen :
**EP-A- 0 060 549
DE-A- 3 437 085**

(73) Patentinhaber : **MANNESMANN
Aktiengesellschaft
Mannesmannufer 2
W-4000 Düsseldorf 1 (DE)**

(72) Erfinder : **Lenze, Friedrich, Dr.-Ing.
Tiefenbroicher Strasse 76
W-4030 Ratingen 4 (DE)**

(74) Vertreter : **Meissner, Peter E., Dipl.-Ing. et al
Patentanwaltsbüro Meissner & Meissner,
Herbertstrasse 22
W-1000 Berlin 33 (DE)**

## Beschreibung

In einem Bergwerk werden für den Abbau untertägig lagernder fester Bodenschätze, wie zum Beispiel Kohle oder Erze, für die Bewetterung, die Kühlung und den Antrieb von Maschinen und Hilfsaggregaten verschiedene Arten von Gasen und Flüssigkeiten benötigt. Diese müssen vom abseits des Hauptschachtes sich befindenden Reservoir bis an die Verbraucherstelle vor Ort transportiert werden. Des weiteren fällt bei der mechanischen Aufbereitung der abgebauten Bodenschätze in größeren Mengen taubes Gestein an. Dieses kann einmal über Tage auf Halde gelagert oder als sogenannter Bergversatz in die Stollen des Bergwerkes eingebracht werden, um die ausgebeuteten Hohlräume wieder aufzufüllen. Für den Transport der Gase, Flüssigkeiten und Feststoffe war es bisher üblich, sowohl im Haupt- bzw. Blindschacht als auch in den davon abzweigenden, im wesentlichen horizontal verlaufenden Stollen bzw. Nebenstollen eine aus Flanschenrohren bestehende Rohrleitung zu verlegen. Die Nachteile einer solchen Leitung sind darin zu sehen, daß für die weit ausladenden Flansche ein ausreichender Freiraum im Verlegebereich vorhanden sein muß und das Verbinden bzw. das Lösen der beiden Flansche an der Verbindungsstelle entsprechend Zeit in Anspruch nimmt. In neuerer Zeit ist man deshalb dazu übergangen, in den vertikal verlaufenden Schächten statt der Flanschenrohre Gewinderohre zu verwenden, die mittels einer Muffe miteinander verschraubt werden. Das Auswechseln eines z. B. beschädigten Rohres aus einer solchen, aus Gewinderohren gebildeten Leitung, stellt ein gewisses Problem dar, da dazu normalerweise ein Drehen der Rohre erforderlich ist. Zur Überwindung dieses Problems ist vorgeschlagen worden, statt einer üblichen Muffe eine Muffe mit einem linksdrehenden und einem rechtdrehenden Gewindeabschnitt zu verwenden.

Bei Verwendung einer solchen Muffe ist das Drehen der Rohre nicht erforderlich, was bei einer horizontal verlegten Rohrleitung in den meisten Fällen auch nicht möglich ist. Nachteilig bei diesem Vorschlag ist, daß an der Verschraubungsstelle beide rechts und links liegende Rohrstränge axial bewegt werden müssen und der erforderliche Weg des Auseinanderschiebens der Rohrleitung mindestens eine Muffenlänge beträgt. Diese Überlegung gilt generell für alle horizontal verlegte Rohrleitungen, wie z. B. Linepipes, die oberirdisch oder unterirdig verlegt und durch Schweißnähte miteinander verbunden sind. Dabei übernimmt die Schweißnaht die Aufgabe der abzudichtenden Verbindung der Rohre. Diese Verbindung kann prinzipiell auch durch eine lösbare Schraubverbindung ersetzt werden, wobei auch hier das Problem des Auswechselns eines Rohres auftritt.

Aus dem Bereich der Erdöl- und Erdgasindustrie ist es bekannt (EP 0060549), die Rohre einer Steigleitung (riser) mittels einer eine Muffe aufweisenden Rohrverbindung miteinander zu verbinden, wobei die Muffe und die zu verbindenden Rohre Gewindeabschnitte mit unterschiedlicher Steigung aufweisen. Damit beim Anziehen der Muffe ein Mitdrehen der beiden miteinander zu verbindenden Rohre verhindert wird, sind die gewindefreien Rohrenden als Klauen ausgebildet, die ineinander steckbar sind. Diese Rohrverbindung ist durch die Ausbildung der Rohrenden mit Klauen oder anderen formschlüssigen Elementen sehr aufwendig und erfordert eine genaue Einfädelung der ineinandersteckbaren Rohre. Sie ist deshalb wenig geeignet für die speziellen Verhältnisse in einem Bergwerk, der verursacht durch den wandernden Abbau, durch stetige Veränderungen gekennzeichnet ist, so daß die in den Stollen angeordneten Rohrleitungen häufiger entschraubt und wieder verschraubt werden müssen.

Aufgabe der Erfindung ist es, eine verbesserte Rohrverbindung zu schaffen, die kostengünstig herstellbar ist und die für eine im wesentlichen horizontal liegende Rohrleitung, insbesondere eine in einem Bergwerksstollen angeordnete Rohrleitung, die Verwendung von Gewinderohren ermöglicht und mit der das Verschrauben und das Auswechseln eines Rohres in einfacher Weise gehandhabt werden kann.

Diese Aufgabe wird durch die kennzeichnenden Merkmale des Hauptanspruches gelöst. Vorteilhafte Weiterbildungen sind in den Unteransprüchen festgelegt.

Mit der vorgeschlagenen verbesserten Rohrverbindung ist es möglich, platzsparende Gewinderohre für den Transport von Flüssigkeiten, Gasen oder Feststoffen benötigten Rohrleitungen in einem Bergwerk zu verwenden. Gegenüber dem Vorschlag der Verwendung einer Muffe mit einer Rechts-Links-Gewindekombination hat der erfindungsgemäße Vorschlag den Vorteil, daß beim Auswechseln eines beschädigten oder eines von innen blockierten Rohres die Leitung nur um wenige Zentimeter auseinander gerückt werden muß. Der definierte Abstand der einander gegenüberstehenden Rohrenden soll so klein wie möglich sein und beträgt weniger als 1/6 der Länge des Gewindeabschnittes mit der größeren Steigung. Je nach Abmessung und Wahl der Steigung der Gewindeabschnitte liegt dieser Wert bei 15 bis 40 mm. Dieser benötigte Verschiebeweg ist durch die in einer horizontal verlegten Rohrleitung vorhandene Flexibilität immer vorhanden, zumal es im Bergwerk üblich ist, eine solche Leitung nicht fest zu verankern, sondern nur aufzuhängen. Dieser gering einzuhaltende Abstand zwischen den beiden Rohrenden wird dadurch erreicht, daß die unterschiedliche Steigung zwischen den beiden Gewindeabschnitten optimal aufeinander abgestimmt und der Unterschied in den beiden Steigungen klein gehalten wird. Dies ist am ehesten zu erreichen, wenn für einen der beiden Gewindeabschnitte eine nicht ganzzahlige Gangzahl (Anzahl Umdrehung pro Einheitslänge) gewählt wird, so daß der Unterschied in den beiden Gangzahlen z. B. nur eine halbe Gang pro inch beträgt. Theoretisch sind auch noch kleinere Unterschiede in den Gangzahlen denkbar, aber im Hinblick auf Verschraubstellung und Umdrehungsanzahl nicht mehr praktikabel. Die Wahl der Steigung für die Gewindeabschnitte hängt zum einen von der Abmessung, von der Größe der zu übertragenden Kräfte und von der gewünschten Robustheit der Verbindung ab. Für Rohre bis zu einem Durchmesser von 420 mm liegen die zu wählenden Steigungen in einem Bereich von 3 bis 8 Umdrehungen/inch.

Um ein Mitdrehen der beiden zu verbindenden Rohre zu verhindern, wird anstatt der bereits entsprechend EP 0060549 bekannten aufwendigen Klauenkonstruktion vorgeschlagen, die beiden Rohre mittels einer zwei lösbare Backen aufweisenden Klemmvorrichtung zu kontern. Dabei bildet diese Klemmvorrichtung mit der die Muffe drehenden Zange eine Einheit. Die vorgeschlagene Klemmvorrichtung kann in der Weise noch verbessert werden, daß zwischen den beiden Backen eine Kolben-Zylindereinheit angeordnet wird. Diese kann unterstützend beim Auseinanderschieben der Rohrleitung im Falle des Herausnehmens eines Rohres oder beim Zusammenziehen der Rohrleitung beim Wiedereinsetzen des neuen Rohres verwendet werden. Der erforderliche Verfahrweg der Kolben kann durch die Anzahl der Umdrehungen der Muffe oder durch Verschiebekraftminimierung geregelt werden. Diese verbesserte Vorrichtung vermeidet bei der Entschraubung wie bei der Verschraubung eine Überlastung des ersten bzw. letzten Gewindeganges.

Die Festlegung der vorgegebenen Ausgangsstellung der auf einem Rohrende aufgeschraubten Muffe kann in verschiedener Weise realisiert werden. Eine Möglichkeit ist das Bündigsein der Stirnfläche eines an der Stirnfläche des Rohrendes anliegenden Hilfsmittels mit der Stirnfläche der aufgeschraubten Muffe. Ein solches Hilfsmittel kann eine als Klotz ausgebildete Maßverkörperung oder ein mit einem Zapfenteil ausgebildeter Ring sein. Das Zapfenteil des Ringes wird in das Rohrende gesteckt, so daß der Ring sauber an der Stirnfläche des Rohrendes anliegt. Die Dicke des Klotzes bzw. des Ringes ist dabei das Maß der in der Ausgangsstellung über der Stirnfläche des Rohrendes hervorstehenden Muffen. Eine einfachere Möglichkeit der Festlegung der Ausgangsstellung der aufgeschraubten Muffe besteht darin, im Bereich des Überganges vom bearbeiteten Rohrende zum unbearbeiteten Rohrbereich eine nutähnliche Eindrehung vorzusehen. Sicherer im Hinblick auf die schlechten Sichtverhältnisse in einem Bergwerk ist der bereits bekannte Vorschlag am Ende des bearbeiteten Rohrendes einen Anschlag anzuordnen. Alternativ kann auch ein lösbarer Anschlag angeordnet werden, der als Gewindering, als Sprengring oder als ein aus zwei Hälften bestehender Ring ausgebildet ist. In allen Fällen kann auf eine entsprechend der EP 0 060 549 vorgeschlagene Schulter als Anschlag verzichtet werden. Diese Schulter kann nur durch einen angeschweißten Verbinder realisiert werden, was die Rohrverbindung entsprechend verteuert, während bei dem erfindungsgemäßen Vorschlag das Gewinde direkt auf dem bearbeiteten Rohrende geschnitten werden kann.

Bei den in einem Bergwerk üblichen Verhältnisse kann es schwierig sein, die beiden zu verbindenden Rohre möglichst fluchtend auf den vorgegebenen Abstand vor Beginn der Verschraubung zu halten. Aus diesem Grunde wird vorgeschlagen, das Rohrende mit dem eine größere Steigung aufweisenden Gewindeabschnitt als gewindefreien Zentrierabsatz auszubilden. Vor Verschraubbeginn wird das Rohr mit dem Zentrierabsatz in die über das Rohrende des Rohres hinausragenden Muffe eingesteckt, so daß durch die beiden anschlagenden Gewindeabschnitte ein genau definierter Abstand der einander gegenüberstehenden Stirnflächen der beiden Rohrenden eingehalten wird. Nachteilig dabei ist, daß der Weg des Auseinanderschiebens der beiden zu verbindenden Rohre um die Länge des Zentrierabsatzes vergrößert wird. Aus diesem Grunde wird sowohl der einzuhaltende Abstand vor Beginn der Verschraubung als auch die Länge des Zentrierabsatzes so gering wie möglich gehalten. Die Verschraublänge, d. h. die Anzahl der erforderlichen Umdrehungen der Muffe, bis zum vollen Eingriff der Gewindeabschnitte der Muffe und des Rohres, ist abhängig von der Steigungsdifferenz und von der Gängigkeit der Gewindeabschnitte, d. h. ob ein- oder mehrgängig und wird so festgelegt, daß die Gewindelängen der Zapfenteile und der Muffe voll im Eingriff sind und nach Erreichen des vorgegebenen Anzugsmomentes die Verbindung dicht ist. Die aneinanderstoßenden senkrechten Stirnflächen der beiden Rohrenden bilden den Dichtsitz und können glattendig oder profiliert ausgebildet sein. Die Stirnflächen können metallisch aufeinanderpressen oder es kann ein Dichtelement dazwischen angeordnet werden. Eine der Varianten besteht darin, die Profilierung der Stirnflächen und die Form des Dichtelementes so aufeinander abzustimmen, daß im verschraubten Zustand das Dichtelement dichtend an der Fläche des gewindefreien Abschnittes der Muffe anliegt.

Der die Muffe aufnehmende Gewindeabschnitt muß unter Berücksichtigung der in einem Bergwerk herrschenden Verhältnisse besonders geschützt werden. Eine Möglichkeit besteht darin, die Muffe so zu verlängern, daß im verschraubten Zustand die gewindefreie Verlängerung der Muffe das Rohrende mit dem eine kleinere Steigung aufweisenden Gewindeabschnitt vollständig abdeckt. Dabei ist noch von Vorteil, daß der Gewindeabschnitt auf dem Rohr voll durchgeschnitten werden kann und nicht wie sonst üblich ein weiterer gewindefreier Abschnitt eingestochen werden muß. Alternativ wird als Schutz vorgeschlagen, an der der Verschraubung gegenüberliegenden Stirnfläche der Muffe ein Dichtelement anzuordnen, das sich bis an die Oberfläche des bearbeiteten gewindefreien Rohrabschnittes erstreckt. In diesem Falle wird der nicht zur Kraftübertragung benötigte Gewindebereich des Rohres auf den Kerndurchmesser abgedreht. Das bei der Ver- und Entschraubung mitgeführte Dichtelement verhindert ein Eindringen von Tropfwasser oder umher fliegender Staubteilchen in das Ende des Gewindeabschnittes.

In der Zeichnung wird anhand einiger Ausführungsbeispiele die erfindungsgemäße Rohrverbindung näher erläutert.

Es zeigen:

Fig. 1 einen Teillängsschnitt der erfindungsgemäßen Rohrverbindung vor Verschraubbeginn

Fig. 2 wie Fig. 1, jedoch im verschraubten Zustand

Fig. 3 wie Fig. 2, jedoch mit einer verlängerten Muffe

Fig. 4 ähnlich wie Fig. 1, jedoch mit einer anders ausgebildeten Muffe und mit eine Isolierung aufweisenden Rohren

Fig. 5 eine Draufsicht der Vorrichtung zum Ver- bzw. Entschrauben der Rohrverbindung.

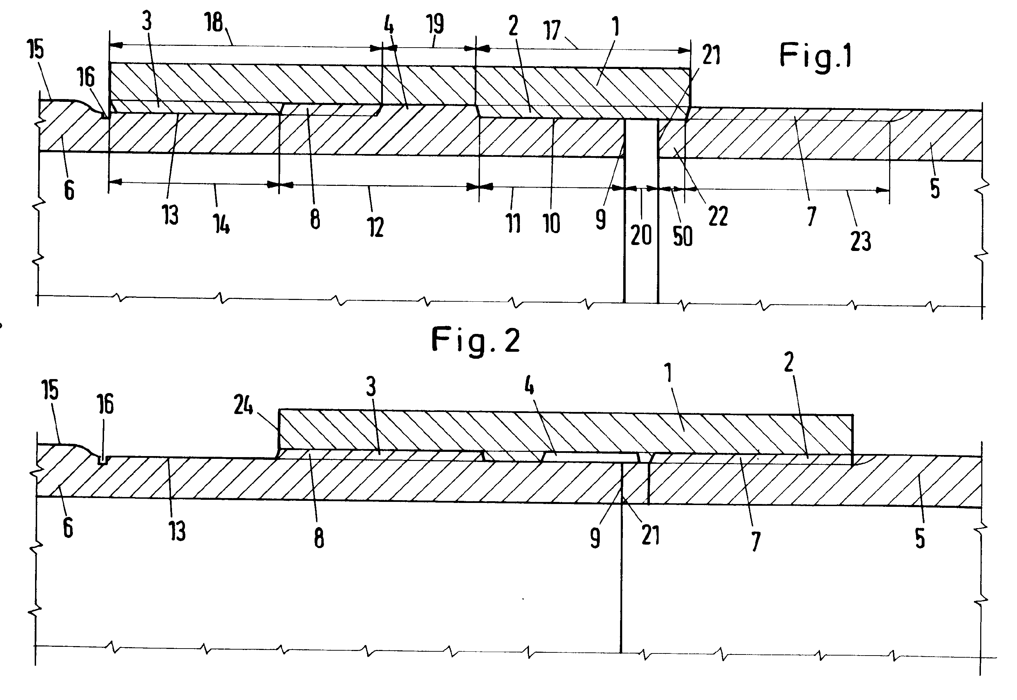

In Figur 1 ist im Teillängsschnitt die verbesserte erfindungsgemäße Rohrverbindung dargestellt. Sie besteht aus einer Muffe 1, die zwei Gewindeabschnitte 2,3 und einen dazwischenliegenden gewindefreien Abschnitt 4 aufweist und den beiden zu verbindenden Rohren 5,6, die je einen als Zapfenteil ausgebildeten, zum Gewindeabschnitt 2,3 der Muffe 1 komplementär ausgebildeten zylindrischen Gewindeabschnitt 7,8 aufweisen. Die Gewindeabschnitte 2,3 der Muffe 1, deren Längen mit je einem Pfeil 17,18 gekennzeichnet sind, weisen eine unterschiedliche Steigung auf, ebenso die Gewindeabschnitte 7,8 der Rohre 5,6. In diesem Ausführungsbeispiel hat der links auf dem Bild liegende Gewindeabschnitt 8 des Rohres 6 bzw. der komplementär dazu ausgebildete Gewindeabschnitt 3 der Muffe 1 eine kleinere Steigerung als der auf dem gegenüberstehenden Rohrende angeordnete Gewindeabschnitt 7. Dadurch ergibt sich bei Drehung der Muffe 1 eine Relativbewegung, da pro Umdrehung die rechts im Bild in Eingriff sich befindenden Gewindeabschnitte 2,7 einen größeren Weg zurücklegen als die links im Bild dargestellten Gewindeabschnitte 3,8. Die Gewindeabschnitte 2,3 der Muffe sind unterschiedlich lang, wobei der eine kleinere Steigung aufweisende Gewindeabschnitt 3 eine größere Länge 18 aufweist als der eine größere Steigung aufweisende Gewindeabschnitt 2. Damit wird sichergestellt, daß in der Ausgangsstellung der Muffe 1 vor Beginn der Verschraubung der eine kleinere Steigung aufweisende Gewindeabschnitt 3 der Muffe 1 über einen größeren Bereich mit dem komplementär dazu ausgebildeten Gewindeabschnitt 8 des Rohres 6 im Eingriff ist. Dies wird aus der Differenz der Längenangaben 12,18 der im Eingriff sich befindenden Gewindeabschnitte 3,8 deutlich.

Um entsprechend Platz zu schaffen für das Aufschrauben der Muffe 1 auf dem Rohrende des links im Bild liegenden Rohres 6 ist der Gewindeabschnitt 8 von der Stirnfläche 9 des Rohres 6 um eine vorgegebene Länge 11 eines gewindefreien Abschnittes 10 zurückversetzt. Die Länge der axialen Erstreckung des Gewindeabschnittes 8 ist mit einem Pfeil 12 gekennzeichnet. Anschließend folgt in diesem Ausführungsbeispiel wieder ein gewindefreier Abschnitt 13 mit einer entsprechenden axialen Erstreckung 14. Alternativ kann der Gewindeabschnitt 8 sich auch bis zum Beginn des unbearbeiteten Rohrbereiches 15 erstrecken. Am Ende des gewindefreien Abschnittes 13 ist im Übergangsbereich zum unbearbeiteten Rohrbereich 15 eine nutenähnliche Eindrehung 16 angeordnet. Diese Eindrehung 16 dient als Festlegung für die Ausgangsstellung der aufgeschraubten Muffe 1. In diesem Ausführungsbeispiel kragt die aufgeschraubte Muffe 1 über das Ende 9 des Rohres 6 über. Um einen definierten Abstand 20 zwischen den beiden Stirnflächen 9,21 der Rohre 5,6 zu erhalten, ist der Endenbereich des rechts im Bild liegenden Rohres 5 als Zentrierabsatz 22 ausgebildet. Die Länge des daran anschließenden Gewindeabschnittes 7 ist mit einem Pfeil 23 und die Länge des Zentrierabsatzes 22 mit einem Pfeil 50 gekennzeichnet. Bei den in einem Bergwerk herrschenden Verhältnissen ist damit zu rechnen, daß die beiden zu verbindenden Rohre 5,6 mit ihren Achsen auch schief zueinander liegen können. Um in einem solchen Falle eine cross-Verschraubung zu vermeiden, dient der Zentrierabsatz 22 auch als Einsteckhilfe. Für ein konkretes Ausführungsbeispiel wurde für die Gewindeabschnitte 3,8 mit der kleineren Steigung eine Gangzahl von 6 Umdrehungen/inch gewählt und für die Gewindeabschnitte 2,7 mit der größeren Steigung eine Gangzahl von 5 Umdrehungen/inch. Dies ergibt eine Differenz von 1 Umdrehung/inch. Um die Relativbewegung des Gesamtsystems zu erhalten, muß die Differenz der Steigungen durch das Produkt der Steigungen geteilt werden. Dies ergibt einen Wert von 0,0333 inch/Umdrehung und in mm umgerechnet einen Wert von 0,845 mm/Umdrehung. Multipliziert man dieser Wert mit der Anzahl der erforderlichen Umdrehungen, um die Gewindeabschnitte 2,7 voll im Eingriff zu haben, dann erhält man den einzuhaltenden Abstand 20 vor Verschraubbeginn. Die Gewindelänge 23 des Gewindeabschnittes 7 des Rohres 5 soll in diesem Beispiel 76,2 mm betragen. Bei einem Gewinde mit einer Steigung von 5 Umdrehungen/inch ergibt sich ein Vorschub von 5,08 mm/Umdrehung. Teilt man die Gesamtlänge von 76,2 mm durch den Vorschub, dann ergeben sich 15 Umdrehungen, bis die beiden Gewindeabschnitte 2,7 voll im Eingriff sind. Die Anzahl der Umdrehungen kann durch Anwendung eines mehrgängigen Gewindes verringert, z. B. bei einem zweigängigen Gewinde halbiert werden. Für den gesuchten Abstand 20 ergibt sich durch Multiplikation des Vorschubes des Gesamtsystems von 0,845 mm/Umdrehung mal der Anzahl der Umdrehungen ein Wert von 12,7 mm. Rechnet man eine gleichgroße Länge 50 für den Zentrierabsatz 22 hinzu, dann muß die Leitung im Falle der Entschraubung um insgesamt 25,4 mm auseinandergedrückt werden, um ein z.B. beschädigtes Rohr entnehmen zu können. Dieser Wert kann durch entsprechende Wahl der Steigung noch weiter reduziert werden.

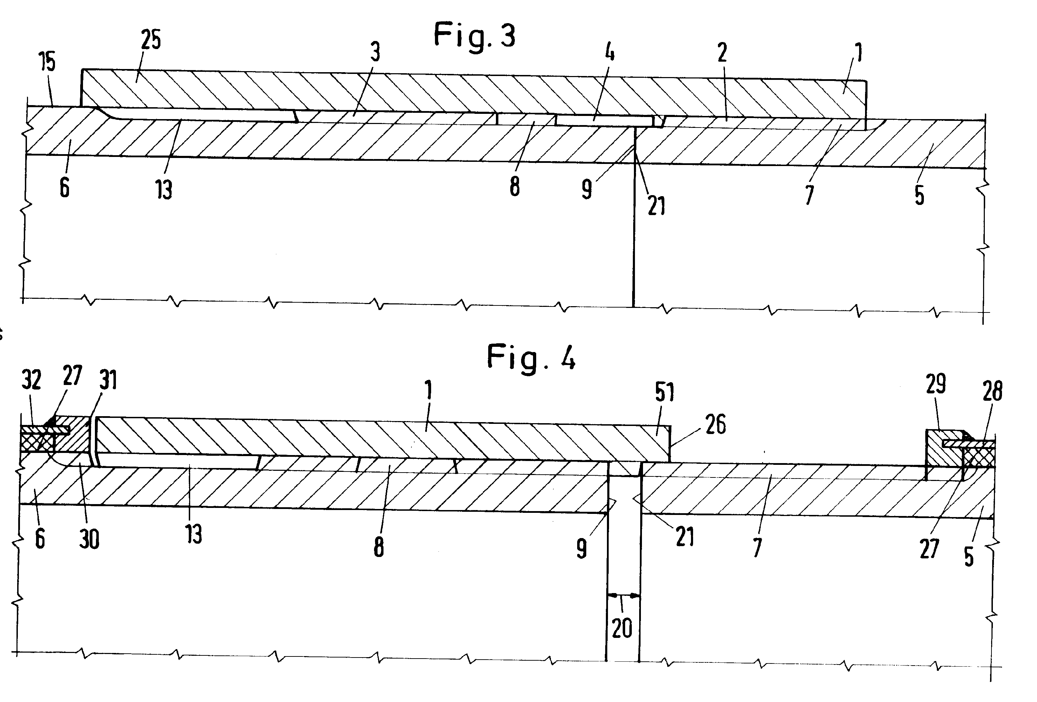

Die gemäß Figur 2 im verschraubten Zustand aneinanderstoßenden Stirnflächen 9,21 der beiden Rohre 5,6 sind in diesem Ausführungsbeispiel als glattendiger metallischer Dichtsitz ausgebildet. Ebenso gut könnten die Flächen auch mit einer Kontur versehen sein. Alternativ ist es auch möglich an dieser Stelle ein Dichtelement (hier nicht dargestellt) anzuordnen. Zum Schutz des Gewindeabschnittes 8 deckt die Muffe 1 im verschraubten Zustand diesen Bereich vollständig ab. Zusätzlich wäre es möglich, an der Stirnseite 24 der Muffe 1 ein Dichtelement anzuordnen, das bis zur Oberfläche des gewindefreien Abschnittes 13 sich erstreckt. Damit wäre sichergestellt, daß es von der rückwärtigen Seite her zu keiner Verkrustung des Gewindeabschnittes 8 kommen kann, die möglicherweise ein Drehen der Muffe 1 zum Lösen der Verbindung stark behindern, im schlechtesten Falle sogar unmöglich machen würde. Alternativ wird auch dazu gemäß Fig. 3 vorgeschlagen, die Muffe 1 auf dieser Seite mit einer axial sich erstreckenden gewindefreien Verlängerung 25 zu versehen. Im verschraubten Zustand wäre dann der gewindefreie Abschnitt 13 des Rohres 6 durch diese Verlängerung 25 vollständig abgedeckt und damit der Gewindebereich 8 entsprechend geschützt. In gleicher Weise würde diese Verlängerung 25 ein auch im Bereich 13 mit der Länge 14 durchgehend geschnittenes Gewinde 8 vollständig abdecken.

Figur 4 zeigt ein weiteres Ausführungsbeispiel, bei dem die Muffe 1 mit einer als Einsteckhilfe dienenden Verlängerung 51 versehen ist. Alternativ zu Figur 1 und Figur 2 werden hier mit einer Isolierung versehene Rohre 5,6 miteinander verbunden. Die Isolierung besteht aus einem Isoliermaterial 27 und einem dieses umgreifende Hüllrohr 28. Damit die Isolierung einen sauberen Abschluß bilden kann, ist auf dem verlängerten Gewindeabschnitt 7 des rechts im Bild liegenden Rohres 5 ein Gewindering 29 aufgeschraubt, der mit dem Hüllrohr 28 verschweißt ist. Auf dem links im Bild liegenden Rohr 6 ist die Konstruktion ähnlich, nur daß die Fortsetzung 30 des Gewindeabschnittes 8 durch den gewindefreien Abschnitt 13 unterbrochen ist. Auch auf diesem kurzen Gewindeabschnitt 30 ist ein Gewindering 31 aufgeschraubt, der ebenfalls mit dem Hüllrohr 32 verschweißt ist. Unabhängig von diesem Sonderfall der Verwendung eines Gewinderinges als Abschluß der Isolierung kann ein solcher aufgeschraubter Gewindering 31 auch als Anschlag zur Festlegung der Ausgangsstellung der aufgeschraubten Muffe 1 benutzt werden. Alternativ kann statt des Gewinderinges auch ein Sprengring oder ein geteilter Ring als Anschlag Verwendung finden.

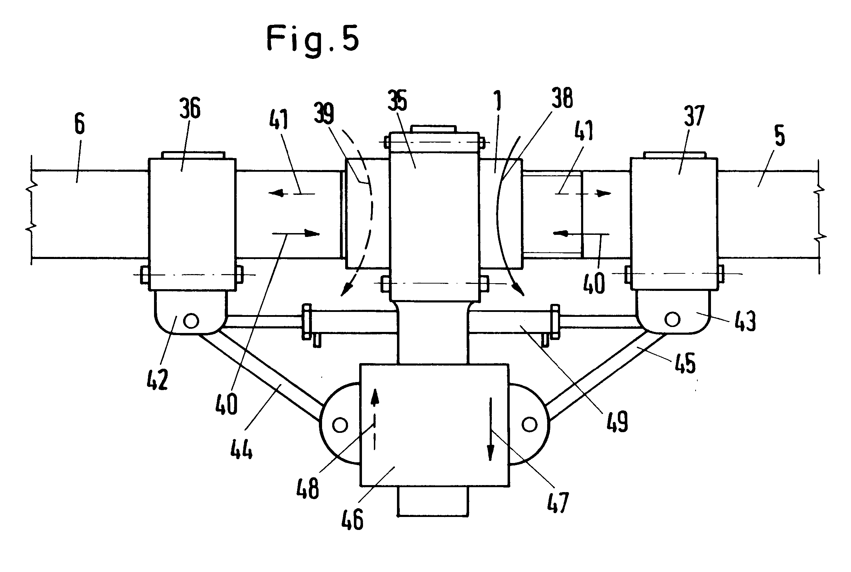

Figur 5 zeigt die für das Verschrauben bzw. Entschrauben notwendige Vorrichtung. Mit einer mechanisch oder hydraulisch schließbaren Zange 35 wird die Muffe 1 umfaßt und gleichzeitig werden die beiden Rohre 5,6 im Abstand davon mit geteilten Backen 36,37 geklemmt. Damit diese die bei der Ver-38 bzw. Entschraubung 39 auftretende Längsbewegung 40,41 mit vollziehen können, ist an den Augen 42,43 der Backen 36,37 jeweils eine Verbindungsstange 44,45 gelenkig angelängt, die wiederum angelängt mit der Haltevorrichtung 46 verbunden ist. Diese Haltevorrichtung 46 ist hier angedeutet durch die Pfeile 47,48 auf der eigentlichen Entschraubungsvorrichtung verschiebbar angeordnet. Durch eine zusätzliche kraftschlüssige axiale Verbindung der Gelenkpunkte 42,43 mittels einer Kolben-Zylindereinheit 49 ist eine definierte axiale Verschiebung der Backen 36,37 möglich, wobei der Verschiebeweg 40,41 entweder kraftgesteuert oder durch die Umdrehung der Muffe 1 geregelt wird.

Innerhalb der Zange 35 ist ein hier nicht dargestellter Zahnkranz gelagert, der mit seiner geriffelten Innenseite fest auf der Außenoberfläche der Muffe 1 sitzt und durch ein Ritzel angetrieben die Drehbewegung der Schiebemuffe 1 auslöst.

Soll die Verbindung verschraubt werden, dann wird in diesem Beispiel die Muffe 1 entsprechend dem durchgezogenen Pfeil 38 gedreht und das Rohr 5 bewegt sich entsprechend dem Pfeil 40 in Richtung des anderen Rohres 6. Gleichzeitig wandert die Haltevorrichtung 46 auf der Führung nach vorne, hier angedeutet durch den Pfeil 47. Beim Entschrauben ist die Verfahrensweise umgekehrt, wie durch die gestrichelt eingezeichneten Pfeile 39,41,48 zu erkennen ist.

**Patentansprüche**

1. Rohrverbindung mit Gewinderohren, die im Bereich der Enden einen als Zapfenteil ausgebildeten zylindrischen Gewindeabschnitt aufweisen und einer die Rohre verbindenden Muffe, die komplementär dazu ausgebildete Gewindeabschnitte und einen dazwischenliegenden gewindefreien Abschnitt aufweist, wobei die Gewindeabschnitte der einander gegenüberstehenden Rohrenden und die der Muffe eine unterschiedliche Steigung haben und bei Drehung der Muffe die durch ein Mittel drehgesicherten Rohre ohne Eigendrehung miteinander verschraubbar und voneinander lösbar sind und vor Beginn der Verschraubung die Muffe bis zu einer vorgegebenen Ausgangsstellung auf einem Rohrende aufgeschraubt und das andere Rohrende über eine bestimmte Länge in der Muffe eingesteckt ist, wobei die beiden einander gegenüberstehenden Rohrenden einen definierten Abstand aufweisen, der nach der Verschraubung geschlossen ist und mindestens das Rohrende, das die in die Ausgangsstellung aufzuschraubende Muffe aufnimmt, mit einem von der Stirnfläche bis zum Anfang des Gewindeabschnittes sich erstreckenden gewindefreien Abschnitt versehen ist, **dadurch gekennzeichnet,** daß die Steigung der beiden Gewindeabschnitte (2,3) der Muffe (1) bzw. der Gewindeabschnitte (7,8) der beiden einander gegenüberstehenden Rohrenden so gewählt ist, daß der einzuhaltende Abstand (20) weniger als 1/6 der Länge des Gewindeabschnittes (2) mit der größeren Steigung beträgt und die nach der Verschraubung aneinanderstoßenden senkrechten Stirnflächen (9,21) der beiden mittels eines Verschraubgerätes drehgesicherten Rohre (5,6) den Dichtsitz bilden und daß der eine kleinere Steigung aufweisende Gewindeabschnitt (3) der Muffe (1) eine größere Länge aufweist als der eine größere Steigung aufweisende Gewindeabschnitt (2) und die Gewindeabschnitte (7,8) der Rohrenden gleich lang sind und der Länge des Gewindeabschnittes (2) der Muffe (1) mit der größeren Steigung entsprechen und die Muffe (1) in der Ausgangsstellung mit mindestens 20 % der Länge des eine kleinere Steigung aufweisenden Gewindeabschnittes (3) in Eingriff steht mit dem komplementär dazu ausgebildeten Gewindeabschnitt (8) des Rohres (6) und dieser Gewindeabschnitt (8) in der Ausgangsstellung und im verschraubten Zustand über die ganze Länge durch die Muffe (1) abgedeckt ist.

2. Rohrverbindung nach Anspruch 1, **dadurch gekennzeichnet,** daß die Gangzahl (Anzahl Umdrehung pro Einheitslänge) des jeweiligen Gewindeabschnittes (2,3,7,8) ganzzahlig ist.

3. Rohrverbindung nach Anspruch 1, **dadurch gekennzeichnet,** daß die Gangzahl mindestens eines der komplementär zueinander ausgebildeten Gewindeabschnitte (2,7 bzw. 3,8) nicht ganzzahlig ist.

4. Rohrverbindung nach den Ansprüchen 1 bis 3, **dadurch gekennzeichnet,** daß der Unterschied in den Gangzahlen der beiden komplementär zueinander ausgebildeten Gewindeabschnitte (2,7 bzw. 3,8) eine Gangzahl oder weniger beträgt.

5. Rohrverbindung nach Anspruch 4, **dadurch gekennzeichnet,** daß der Unterschied eine halbe Gangzahl beträgt.

6. Rohrverbindung nach Anspruch 1, **dadurch gekennzeichnet,** daß die Bündigkeit der Stirnfläche eines an der Stirnfläche (9) des Rohrendes anliegenden Hilfsmittels mit der Stirnfläche (26) der aufgeschraubten Muffe (1) eine Festlegung für die Ausgangsstellung der aufgeschraubten Muffe (1) bildet.

7. Rohrverbindung nach Anspruch 1, **dadurch gekennzeichnet,** daß eine im Bereich des Überganges vom bearbeiteten, die Muffe (1) aufnehmenden Rohrende zum unbearbeiteten Rohrbereich (15) angeordnete nutähnliche Eindrehung (16) eine Festlegung für die Ausgangsstellung der aufgeschraubten Muffe (1) bildet.

8. Rohrverbindung nach Anspruch 1, **dadurch gekennzeichnet,** daß an der der Verschraubungsstelle gegenüberliegenden Stirnfläche (24) der Muffe (1) ein Dichtelement angeordnet ist, das sich dichtend bis auf die Oberfläche eines zwischen dem Gewindeabschnitt (8) und dem unbearbeiteten Rohrbereich liegenden gewindefreien Rohrabschnittes (13) erstreckt.

9. Rohrverbindung nach Anspruch 1, **dadurch gekennzeichnet,** daß die aneinanderstoßenden Stirnflächen (9,21) der zu verbindenden Rohre (5,6) glattendig ausgebildet sind und einen metallischen Dichtsitz bilden.

10. Rohrverbindung nach Anspruch 1, **dadurch gekennzeichnet,** daß die aneinanderstoßenden Stirnflächen (9,21) der zu verbindenden Rohre (5,6) komplementär profilierte Formen aufweisen.

## Claims

1. Pipe coupling with threaded pipes, which comprise in the area of the ends a cylindrical threaded section, which is formed as a spigot, and a socket, which connects the pipes and comprises threaded sections, which are complementary to the pipes, and a plain section disposed in between, in which the threaded sections of the opposite pipe ends and those of the socket have a different pitch, when the socket is rotated the pipes, which are secured against rotation by a device, can be screwed together and disconnected from one another without rotating themselves, and the socket is screwed onto one pipe end up to a predetermined starting position and the other pipe end is inserted in the socket over a certain length before screwing home commences, the two opposite pipe ends being disposed at a defined spacing, which is closed after screwing home so as to form a tight fit, and at least the pipe end which receives the socket to be screwed on into the starting position being provided with a plain section which extends from the front face to the beginning of the threaded section, **characterised** in that the pitch of the two threaded sections (2, 3) of the socket (1) and of the threaded sections (7, 8) of the two opposite pipe ends is selected such that the spacing (20) to be maintained is less than 1/6 of the length of the threaded section (2) having the greater pitch, the vertical front faces (9, 21), which abut following screwing home, of the two pipes (5, 6), which are secured against rotation by means of a screw device, form the tight fit, the threaded section (3) of the socket (1) having the smaller pitch is longer than the threaded section (2) having the greater pitch, the threaded sections (7, 8) of the pipe ends are of the same length and correspond to the length of the threaded section (2) of the socket (1) having the greater pitch, when in the starting position the socket (1) is in engagement over at least 20 % of the length of the threaded section (3) having the smaller pitch with the complementary threaded section (8) of the pipe (6), and this threaded section (8) is covered over its entire length by the socket (1) when in the starting position and when screwed home.

2. Pipe coupling according to claim 1, **characterised** in that each threaded section (2, 3, 7, 8) has an integral number of starts (number of turns per unit length).

3. Pipe coupling according to claim 1, **characterised** in that at least one of the complementary threaded sections (2, 7 and 3, 8) has a non-integral number of starts.

4. Pipe coupling according to claims 1 to 3, **characterised** in that the difference in the number of starts of the two complementary threaded sections (2, 7 and 3, 8) is one start or less.

5. Pipe coupling according to claim 4, **characterised** in that the difference is half a start.

6. Pipe coupling according to claim 1, **characterised** in that the surface alignment of the front face of an aid bearing against the front face (9) of the pipe end with the front face (26) of the screwed-on socket (1) forms a fixed point for the starting position of the screwed-on socket (1).

7. Pipe coupling according to claim 1, **characterised** in that a groove-like recess (16), which is disposed in the area of the transition from the machined pipe end which receives the socket (1) to the unmachined pipe area (15), forms a fixed point for the starting position of the screwed-on socket (1).

8. Pipe coupling according to claim 1, **characterised** in that a sealing member is disposed at the front face (24) of the socket (1) which is opposite the screwed-home point, which member extends as a seal up to the surface of a plain pipe section (13) lying between the threaded section (8) and the unmachined pipe area.

9. Pipe coupling according to claim 1, **characterised** in that the abutting front faces (9, 21) of the pipes (5, 6) to be connected have smooth ends and form a metallic tight fit.

10. Pipe coupling according to claim 1, **characterised** in that the abutting front faces (9, 21) of the pipes (5, 6) to be connected are profiled in a complementary manner.

## Revendications

1. Raccord de tubes comprenant des tubes filetés, qui, dans la zone des extrémités, présentent un tronçon fileté cylindrique réalisé en tant qu'embout, et un manchon qui relie les tubes et qui comporte des tronçons filetés de configuration complémentaire au précédent, et, entre ces deux tronçons filetés, un tronçon non fileté, les tronçons filetés des extrémités de tube se faisant face et ceux du manchon présentant un pas différent, et les tubes bloqués en rotation par un moyen approprié pouvant être solidarisés par vissage ou désolidarisés entre-eux, lors de la rotation du manchon, le manchon étant, avant le début du vissage de solidarisation, vissé sur une extrémité de tube jusqu'à une position de référence prédéfinie, l'autre extrémité de tube étant engagée dans le manchon sur une longueur déterminée, les deux extrémités de tubes présentant entre-elles un espacement défini, qui, après solidarisation par vissage, est réduit à néant en créant un appui d'étanchéité, et au moins l'extrémité de tube qui reçoit le manchon devant être vissé dans la position de référence, étant pourvue d'un tronçon non fileté s'étendant de sa face frontale jusqu'au début du tronçon fileté, **caractérisé** en ce que le pas des deux tronçons filetés (2, 3) du manchon (1), et des tronçons filetés (7, 8) des deux extrémités de tube se faisant face, est choisi de telle sorte que l'espacement (20) à respecter est inférieur à 1/6 de la longueur du tronçon fileté (2) présentant le plus grand pas, et les deux surfaces frontales verticales (9, 21) des deux tubes (5, 6) bloqués en rotation au moyen d'un appareil de vissage, forment l'appui d'étanchéité en venant en contact l'une de l'autre après la solidarisation par vissage, et en ce que le tronçon fileté (3) du manchon (1), présentant le pas le plus faible, est d'une longueur plus grande que le tronçon fileté (2) présentant un pas plus grand, les tronçons filetés (7, 8) des extrémités de tube étant de même longueur et correspondent à la longueur du tronçon fileté (2) du manchon (1) présentant le plus grand pas, et en ce que le manchon (1), dans la position de référence, coopère par au moins 20% de la longueur du tronçon fileté (3) présentant le plus petit pas, avec le tronçon fileté (8) du tube (6), de configuration complémentaire, ce tronçon fileté (8) étant recouvert sur la totalité de sa longueur par le manchon (1), dans la position de référence ainsi qu'à l'état solidarisé par vissage.

2. Raccord de tubes selon la revendication 1, **caractérisé** en ce que le nombre de pas (nombre de tours par unité de longueur) de chaque tronçon fileté (2, 3, 7, 8) est un nombre entier.

3. Raccord de tubes selon la revendication 1, **caractérisé** en ce que le nombre de pas d'au moins un des tronçons filetés de configuration complémentaire (2, 7 et 3, 8), n'est pas un nombre entier.

4. Raccord de tubes selon les revendications 1 à 3, **caractérisé** en ce que la différence des nombres de pas des deux tronçons filetés de configuration complémentaire (2, 7 et 3, 8) est égale à un tour par unité de longueur, ou moins.

5. Raccord de tubes selon la revendication 4, **caractérisé** en ce que la différence est égale à un demi tour par unité de longueur.

6. Raccord de tubes selon la revendication 1, **caractérisé** en ce que l'alignement de la surface frontale d'un moyen auxiliaire appliqué contre la surface frontale (9) de l'extrémité de tube, avec la surface frontale (26) du manchon (1) vissé, constitue une localisation pour la position de référence du manchon (1) vissé.

7. Raccord de tubes selon la revendication 1, **caractérisé** en ce qu'un évidement de tournage (16) en forme de gorge, réalisé dans la zone de transition entre l'extrémité de tube usinée et recevant le manchon (1), et la zone de tube non usinée (15), constitue une localisation pour la position de référence du manchon (1) vissé.

8. Raccord de tubes selon la revendication 1, **caractérisé** en ce que sur la surface frontale (24) du manchon (1), opposée à la zone de vissage, est disposé un élément d'étanchéité qui s'étend de manière étanche jusque sur la surface extérieure d'un tronçon de tube non fileté (13) situé entre le tronçon fileté (8) et la zone de tube non usinée.

9. Raccord de tubes selon la revendication 1, **caractérisé** en ce que les surfaces frontales (9, 21) en contact réciproque, des tubes (5, 6) à relier, sont réalisées de manière à être lisses et forment un appui d'étanchéité à contact métallique.

10. Raccord de tubes selon la revendication 1, **caractérisé** en ce que les surfaces frontales (9, 21) en contact réciproque, des tubes (5, 6) à relier, présentent des formes profilées complémentaires.

Fig.1

Fig. 2

EP 0 389 074 B1

## Fig. 3

## Fig. 4

# Fig.5

EP 0 389 074 B1